Europäisches Patentamt

European Patent Office

Office européen des brevets

(11) Publication number: **0 013 588**

A1

## (12) EUROPEAN PATENT APPLICATION

(21) Application number: 80200020.8

(22) Date of filing: 08.01.80

(51) Int. Cl.³: **G 01 N 9/26**
**E 02 F 3/88**

(30) Priority: 09.01.79 NL 7900161

(43) Date of publication of application:
**23.07.80 Bulletin 80/15**

(84) Designated Contracting States:
**BE DE FR GB IT NL SE**

(71) Applicant: **Van der Veen, Romke**
**Van Boetzelaerlaan 87**
**NL-2581 AD The Hague(NL)**

(72) Inventor: **Van der Veen, Romke**
**Van Boetzelaerlaan 87**
**NL-2581 AD The Hague(NL)**

(74) Representative: **Konings, Lucien Marie Cornelis**
**Joseph et al,**
**OCTROOIBUREAU ARNOLD & SIEDSMA Sweelinckplein**
**1**
**NL-2517 GK Den Haag(NL)**

(54) Method and device for recording a measuring value dependent upon the density of a ground-water mixture.

(57) Measuring the density of a ground-water mixture column standing in a hold (10) of a ship by means of a sounding-rod (37) introduced into said mixture column, whilst the height of a measuring column (2) with fluid (17) of known density being changed for adapting its weight to that of the mixture column.

FIG. 1

EP 0 013 588 A1

Croydon Printing Company Ltd.

-1-

Method and device for recording a measuring value dependent upon the density of a ground-water mixture.

The invention relates to a method of recording a measuring value depending upon the density of a ground-water mixture column, in which the hydrostatic pressure at the lower end of a ground-water mixture column standing in a hold is determined.

In a known method a pressometer is disposed below in the hold of a dredger for recording the hydrostatic pressure by the elastic deformation of a diaphragm due to the hydrostatic pressure. As a result of the frequent deformations of the diaphragm the rigidity thereof changes so that the measuring value varies.

The invention provides a simple method in which the aforesaid disadvantage does not occur and which is particularly suitable for use in dredging operations, since the hydrostatic pressure of the ground-water mixture column is compared with a measuring column of measuring fluid of known density, the height of the measuring column being changed for equalizing the hydrostatic pressures at the lower ends of the measuring column and of the ground-water mixture column, whilst the height of the measuring column is measured and the measuring value to be recorded is derived from said height.

The invention relates furthermore to and provides a device for recording, by using the method according to the invention, a measuring value depending upon the density of a ground-water mixture column, said device comprising a standing conduit arranged or to be arranged in a hold, filled with measuring fluid of known specific weight, a comparator for comparing the hydrostatic pressures at the lower ends of the ground-water mixture column and of the standing conduit and being characterized by compensation means for changing the height of the measuring column in the standing conduit until the comparator signallizes equality of the hydrostatic pressures of the ground-water mixture column and of the measuring column and by means for measuring the height of the measuring column.

It should be noted that a mode of measuring the specific weight of a fluid passing through a conduit is known from Dutch patent application 7009435, laid up for public inspection, or from US patent specification 3,190,126, in which the weight of a fluid column is compared with the weight of a measuring column of measuring fluid of known specific weight and in which the height of the measuring column is changed for equalizing its weight to that of the column of fluid to be measured, said change being carried out by accommodating the measuring column in a deformable, flexible conduit.

The invention will be described more fully hereinafter with reference to a drawing.

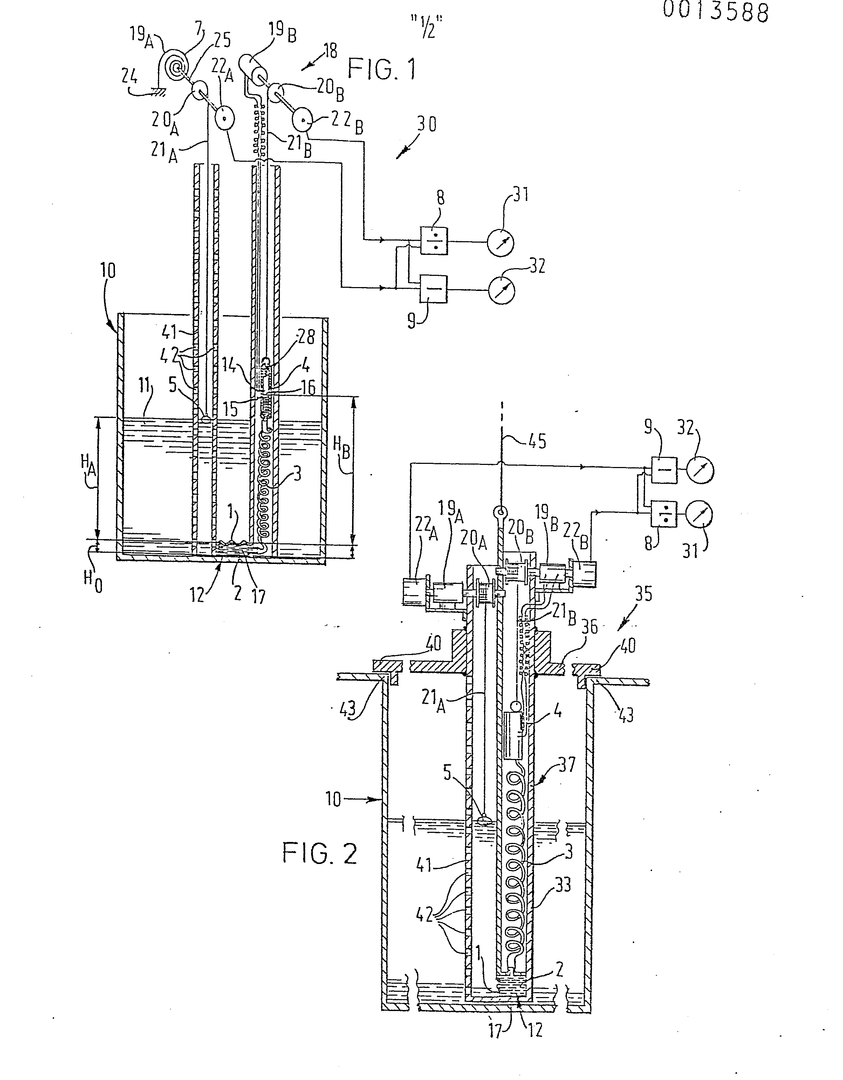

In the drawing Figures 1, 2 and 3 each show schematically a preferred embodiment of a device in accordance with the invention by means of which a preferred method according to the invention can be carried into effect.

The hold 10 of a dredger contains a mixture 11 formed by a suspension of water and earth, sludge, sand and iron ore, the density $r_A$ of said suspension being unknown. The device according to the invention comprises a pressure meter 12 having a diaphragm 1, beneath which is located a chamber 2 containing a measuring fluid 17 whose density $r_B$

is known. The diaphragm 1 is subjected to a hydrostatic pressure equal to the product of the height $H_A$ of the mixture 11 above the diaphragm 1 and of the mean density $r_A$ of said mixture 11. The chamber 2 is in open communication through a flexible conduit 3 (hose) with a measuring vessel 4, which can be moved up and down with the aid of compensation means 18. Inside the measuring vessel 4 feelers 14 and 15 are arranged above and below respectively the level 16 of the measuring vessel 4, each feeler signallizing the presence or absence of measuring fluid 17 at the area concerned.

The compensation means 18 comprise an electric servomotor $19_B$, which is coupled with a winch drum $20_B$ for winding up and paying out respectively a cable $21_B$, to which the measuring vessel 4 is suspended. When the level of the measuring fluid 17 falls below the feeler 15, the latter transmits an "absence of measuring fluid" signal to the servomotor $19_B$ in order to lower the measuring vessel 4 to an extent such that the feeler 14 again assesses the presence of measuring fluid 17 and signallizes to the servomotor $19_B$ to reverse its direction of rotation, that is to say, to raise the measuring vessel 4. These compensation means 18 ensure that the measuring vessel 4 invariably arrives at that height where the hydrostatic pressure at the area of the diaphragm 1 exactly compensates for the hydrostatic pressure in the hold 10 at the area of the diaphragm 1. Since the density of the measuring fluid $r_B$ is constant, the height $H_B$ of the measuring vessel 4 to the diaphragm 1 is a measure for the hydrostatic pressure on the diaphragm 1. The winch drum $20_B$ is provided with a position meter $22_B$, which indicates a position corresponding to the height $H_B$. When the hydrostatic pressure on the diaphragm 1 changes, the measuring fluid level in the measuring vessel 4 rises or falls in dependence upon the sense of the hydrostatic pressure variation. The feelers 14 and 15 control the servomotor $19_B$ in a manner such that a new state of equilibrium for the measuring vessel 4 is reached.

The end position of the diaphragm 1 is each time equal to its initial position, since the overall contents of the chamber 2, the flexible conduit 3 and the measuring vessel 4 will substantially not vary. The flow resistance in the flexible conduit 3 ensures a damped follow-up of the hydrostatic pressure on the diaphragm 1. Therefore, this system is suitable for use under rough conditions such as present in a dredger.

In order to calculate the mean density $r_A$ a pipe 41 having apertures 42 is introduced into the mixture 11 for measuring the varying height $H_A$ of the level of the mixture 11 - calculated as from the diaphragm 1 - by means of a float 5, which is suspended by means of a cable $21_A$ to a winch drum $20_A$. A motor $19_A$ ensures that the winch drum $20_A$ invariably occupies that position which corresponds to the height assessed by the float 5. The motor $19_A$ may consist of a helical spring 7, one end of which is connected to earth 24 and the other end of which is rigidly connected with the shaft 25 of the winch drum $20_A$. A position meter $22_A$ coupled with the winch drum $20_A$ can be read at the spot or from a remote position like the position meter $22_B$. By dividing the measuring results of the position meters $22_A$ and $22_B$ one by the other, the ratio between the mean density $r_A$ of the mixture 11 and the density $r_B$ of the measuring fluid 17 is obtained. In the case of a dredger particularly the bulk of the solid substance in the mixture of water and solid matter is concerned. The bulk can be simply determined by subtracting the signal $S_A$ from the signal $S_B$, if the density of the fluid 17 is equal to 1.0 $kgf/dm^3$. For this purpose the signals $S_A$ and $S_B$ of the position meters $22_A$ and $22_B$ are applied to the divider 8 and the subtractor 9 respectively, which are connected to a density indicator and a recorder 31 or to a bulk indicator and/or recorder 32 for the solid matter respectively.

If the shape of the hold 10 does not exhibit a linear quantity-to-height characteristic curve, the measuring results have to be corrected accordingly, at least for determining the overall bulk in the hold 10. The measuring fluid 17 preferably has a higher density than water and preferably evaporates slowly. An automatically closing valve 28 in the measuring vessel 4 prevents loss of measuring fluid 17.

Calibration of the device 30 according to the invention can be simply carried out by filling the hold 10 with water instead of filling it with the mixture 11. If in this case a density of 1.0 is indicated, the device 30 operates perfectly. Rolling movements of the hold 10 of the vessel will substantially not affect the measuring results, since these movements produce equal hydrostatic pressure increases on both sides of the diaphragm 1. Basically, the device 30 is not sensitive to variations in gravity and atmospheric pressure.

The flexible conduit 3 is preferably accommodated in a cylinder 33. More preferably the device 35 according to the invention shown in Figure 2 is constructed in the form of a sounding-rod 37 separated from the hold 10, said rod extending, for example, through a beam 36 lying across the hold 10, the rod being thus held in a vertical position. The sounding-rod 37 comprises the cylinder 33 enveloping the flexible conduit 3 and having at its lower end a chamber 2 bounded by a vertical diaphragm 1 and a pipe 41 having apertures 42 and contacting the cylinder 33. In the top ends of the cylinder 33 and the pipe 41 are rotatably journalled the winch drums $20_B$ and $20_A$ respectively with the elements coupled herewith. This sounding-rod 37 can be readily employed in order of succession for a plurality of holds 10, which is important for filling hopper-barges with soil.

The sounding-rod 37 may, as an alternative, be suspended to a cable 45 of the lifting device (not shown) of a scoop loader and can thus be lowered into each further hold until its stops 40 on the transverse beam 36 come into contact with the rims 43 of the hold 10.

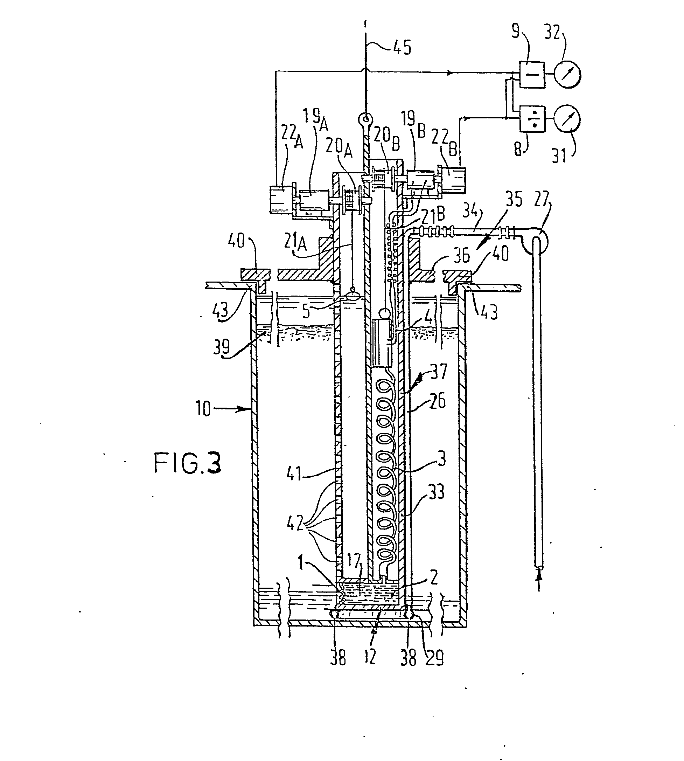

In order to facilitate positioning of the sounding--rod 37 in a hold 10 already filled with packed sand 39, a conduit 26 (see Figure 3) is arranged alongside the sounding--rod 37 and connected through a hose 34 with a water pump 27, said conduit feeding water to an annular conduit 29 surrounding the lower end of the sounding-rod 37. The ring conduit 29 has outlet ports 38 distributed along its circumference,

0013588

from which the water emerges to fluidize the sand 39 during lowering of the sounding-rod 37 into a hold 10.

During the measuring operation a very small amount of water is pumped through the ring conduit 29 into the hold 10 in order to ensure that the measuring value will not be disturbed by a bridge of compact sand located above the diaphragm 1. A small amount of fluidizing water will hardly or even not at all affect the measuring value.

The device of Figure 3 differs furthermore from that of Figure 2 in that the diaphragm 1 is not included in the pipe 41 and is, instead, disposed beneath the same to directly face the hold 10.

0013588

-1-

<u>CLAIMS</u>

1. A method of recording a measuring value depending upon the density of a ground-water mixture column, in which the hydrostatic pressure at the lower end of a ground--water mixture column standing in a hold is determined, characterized in that the hydrostatic pressure of the ground-water mixture column is compared with a measuring column of measuring fluid of known density, the height of the measuring column being changed for equalizing the hydrostatic pressures at the lower ends of the measuring column and of the ground-water mixture column, whilst the height of the measuring column is measured and the measuring value to be recorded is derived from said height.

2. A method as claimed in claim 1, characterized in that the height of the measuring column is changed by arranging the measuring column in a flexible conduit, which is deformed in a manner such that the height of the measuring column is adjusted for equalizing the hydrostatic pressures at the lower ends of the ground-water mixture column and of the measuring column.

3. A method as claimed in claim 1 or 2, characterized in that near the lower end of the ground-water

mixture column a slight amount of fluidizing water is added.

4. A device for recording, by using the method claimed in claim 1, 2 or 3, a measuring value depending upon the density of a ground-water mixture column, comprising a standing conduit arranged or to be arranged in a hold, filled with measuring fluid of known specific weight, a comparator for comparing the hydrostatic pressures at the lower ends of the ground-water mixture column and of the standing conduit, characterized by compensation means for changing the height of the measuring column in the standing conduit until the comparator signallizes equality of the hydrostatic pressures of the ground-water mixture column and of the measuring column and by means for measuring the height of the measuring column.

5. A device as claimed in claim 4, characterized in that the standing conduit is a flexible conduit, the height of which is adjustable.

6. A device as claimed in claim 4 or 5, characterized in that the height of the measuring column in the flexible conduit is adjustable with the aid of a servomotor which is coupled with a position meter.

7. A device as claimed in anyone of claims 4 to 6, characterized by a measuring system provided with a float for assessing the height of the ground-water mixture column.

8. A device as claimed in anyone of claims 4 to 7, characterized by a divider for dividing one by the other the heights of the measuring column and of the ground-water mixture column.

9. A device as claimed in anyone of claims 4 to 8, characterized by a subtractor for subtracting one from the other the heights of the measuring column and of the ground-water mixture column.

10. A device as claimed in anyone of claims 4 to 9, characterized by a fluidizing conduit for feeding a slight amount of fluidizing water to the ground-water mixture column to be measured.

0013588

FIG. 1

FIG. 2

0013588

FIG.3

European Patent Office

**EUROPEAN SEARCH REPORT**

| | **DOCUMENTS CONSIDERED TO BE RELEVANT** | | | CLASSIFICATION OF THE APPLICATION (Int. Cl. ³) |
|---|---|---|---|---|
| Category | Citation of document with indication, where appropriate, of relevant passages | Relevant to claim | | |
| D,X | US – A – 3 190 126 (J.R. WRIGHT)<br>* Column 1, line 67 – column 3, line 70; figures 1,2 * | 1,2,4– 6 | | G 01 N 9/26<br>E 02 F 3/88 |
| | –– | | | |
| | US – A – 3 690 184 (P. CHADENSON)<br>* Column 2, line 12 – column 3, line 22; figure 1 * | 1,4 | | |
| D | & NL – A – 70 09435 | | | |
| | –– | | | TECHNICAL FIELDS SEARCHED (Int.Cl. ³) |
| A | US – A – 3 554 009 (R. V.D. VEEN)<br>* Column 6, lines 10–24; figure 1 * | 1 | | |
| | –––– | | | G 01 N 9/26<br>E 02 F 3/88<br>E 02 F 7/04 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| The present search report has been drawn up for all claims | | |
| Place of search | Date of completion of the search | Examiner |
| The Hague | 15–04–1980 | ANTHONY |

EPO Form 1503.1   06.78